# EUROPEAN PATENT APPLICATION

(11) **EP 0 903 068 A1**
(43) Date of publication of application: **24.03.1999**
(21) Application number: 98203091.8
(22) Date of filing: 16.09.1998
(51) Int. Cl.: A01C 15/00, A01C 17/00

(54) **An implement for spreading granular and/or pulverulent material**

(30) Priority: 22.09.1997 NL 1007092
(71) Applicant: MAASLAND N.V., 3155 PD Maasland (NL)
(72) Inventor: van der Lely, Olaf, 6300 Zug (CH)
(74) Representative: Corten, Maurice Jean F.M.

(57) **Abstract**

The invention relates to an implement for spreading granular and/or pulverulent material, which implement comprises a frame (5) arranged transversely to the direction of travel of the implement (1), a hopper (6) for the material to be spread, as well as two spreader members (13) which are fitted on or to the frame (5) at some distance from each other and which are provided with a spreader element (17) for spreading the material. At least one of these spreader members (13) comprises supporting means (7) with the aid of which the relevant spreader member (13) is supported on the ground during operation.

## Description

The invention relates to an implement for spreading granular and/or pulverulent material, which implement comprises a frame arranged transversely to the direction of travel of the implement, a hopper for the material to be spread, as well as two spreader members which are fitted on or to the frame at some distance from each other and which are provided with a spreader element for spreading the material.

Such an implement is known from DE-OS-31 22 331.

This known implement has a central hopper for the material to be spread with a carrier arranged on either side thereof, to which carrier, near the end thereof, there is disposed a spreader member. This known implement has the disadvantage that, when the spreader members are disposed at a considerable distance from the hopper, the construction of the carrier has to be very rigid for being able to carry the weight of the spreader members. Furthermore this known implement has the disadvantage that, when the implement is moved over uneven ground, the carriers will bounce relative to the hopper, so that a proper distribution of the material to be spread over the ground surface will not be obtained.

The invention has for its object to obviate the above-mentioned drawbacks or to limit them at least to a significant extent.

In accordance with the invention this is achieved in that at least one spreader member comprises supporting means with the aid of which the relevant spreader member is supported on the ground during operation. Because of the presence of the supporting means, a relatively light carrier can be used, while the implement is rather stable also in case of uneven ground. For the purpose of designing the implement as an even more stable one, according to an inventive feature the two spreader members are each provided with supporting means. According to an inventive feature the supporting means comprise a wheel or a wheel set. In particular the unevennesses of the ground can be followed very well if, according to an inventive feature, the wheel set is designed as a tandem wheel set. In order to prevent the carriers from being overloaded, the implement according to the invention comprises drive means with the aid of which the wheel or the wheel set is driven. In a preferred embodiment of the invention, the drive means comprise synchronizing means. With the aid of the synchronizing means it is possible to drive the wheels or the wheel sets of the spreader members at an equal speed. If the implement is drawn by a tractor or a similar vehicle, it is further possible to follow the speed of the tractor with the aid of the synchronizing means, without the occurrence of differences in speed and forces resulting therefrom and/or moments between the implement and the tractor. According to a further inventive feature, the synchronizing means comprise a wheel speed sensor and/or a speed radar and/or a dynamometer.

For the purpose of making the implement follow a predetermined track, according to an inventive feature the implement comprises displacing means with the aid of which at least one spreader member can be displaced in a direction transversely to the usual direction of travel of the implement. In this manner it is possible to move the spreader member(s) across a previously laid tramline. According to a further inventive feature the displacing means comprise a parallelogram construction. According to again another inventive feature the displacing means comprise a telescopically extendable portion which is incorporated in the frame. In order to fully automate the track, according to an inventive feature the implement is provided with track-following means with the aid of which the supporting means are guided across a previously determined or recorded track over the surface to be worked. According to a further aspect of the invention the track-following means comprise a feeler element with the aid of which a previously laid tramline of a tractor can be felt. According to an inventive feature it is further possible for the track-following means to comprise a camera.

In accordance with a further inventive feature the implement comprises height-adjusting means with the aid of which a spreader element of a spreader member can be adjusted in height. In this manner it is possible to apply a so-called top dressing with the implement.

Besides the fact that the implement may be a self-propelled one, according to a further inventive feature the implement may comprise coupling means fitted to the frame, by means of which the implement can be coupled to a tractor or a similar vehicle. According to again another aspect of the invention, near the coupling means there is provided a hopper for the material to be spread.

In accordance with again another inventive feature, between the hopper and the spreader members there are disposed transport means with the aid of which the material to be spread is transported from the hopper to the spreader members.

According to again another aspect of the invention, the implement comprises two spreader members which are arranged at a distance of at least 18 metres from each other. According to a further inventive feature the spreader members are designed as two-disc centrifugal spreaders. In a preferred embodiment of the invention each of the spreader discs of the centrifugal spreader distributes the material over an approximately equal spreading sector. In this situation the two sectors overlap each other. According to again another inventive feature, the effective working width of the implement amounts to at least 36 metres.

In accordance with an inventive feature, on either side of the hopper the frame comprises a carrier extending transversely to the usual direction of travel of the implement, on which carrier there is fitted a spreader member, each of the carriers being capable of pivoting, forwards or rearwards viewed in the usual direction of travel of the implement, into the transport position about a respective axis that is orientated substantially vertically.

The invention will now be explained in further detail with reference to the accompanying drawings, in which:
Figure 1 is a plan view of the implement for spreading granular and/or pulverulent material according to the invention, and
Figure 2 is a rear view of the implement shown in Figure 1 according to the arrow II.

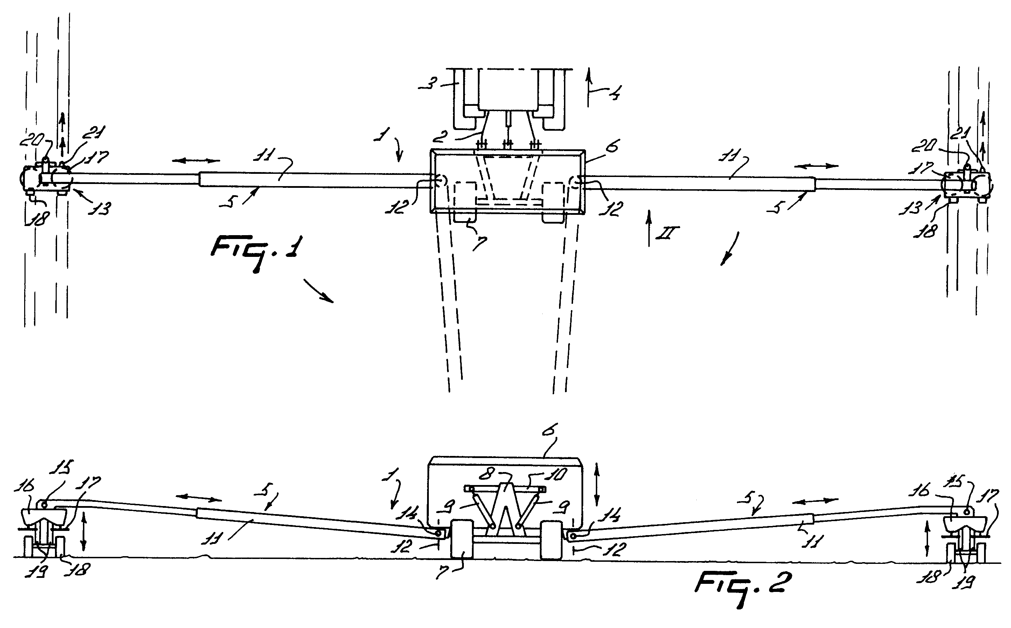

Figure 1 shows a spreading implement 1 which is coupled to a tractor 3 by means of a three-point coupling trestle 2. The spreading implement 1 comprises a frame 5 arranged transversely to the direction of travel 4 of the implement, which frame 5 is provided approximately in its centre with a hopper 6 for the material to be spread. The hopper 6 is supported by a wheel set 7. On both sides of the wheel set 7 there is arranged a V-shaped trestle 8 with a hydraulic cylinder 9 disposed on either side thereof. With their other ends the cylinders 9 are connected with the hopper 6 via a crossbeam 10 (Figure 2). By energizing the cylinders 9, the hopper 6 can be moved in height relative to the wheel set 7. On both sides of the hopper 6 the frame 5 comprises telescopic carriers 11 one end of which is connected to the hopper 6 via a vertical hinge pin 12 and whose other end is provided with a spreader member 13. As shown in Figure 2, the vertical hinge pin 12 comprises near its lower side a horizontal hinge pin 14 about which the telescopic carrier 11 is capable of pivoting. Near the other end of the telescopic carrier 11 there is also disposed a horizontal hinge pin 15, the arrangement being such that the telescopic carrier 11 can pivot and/or can be pivoted relative to the spreader member 13. Each of the spreader members 13 comprises a smaller hopper 16 which is provided at its lower side with two spreader elements 17 by means of which the material can be distributed over the parcel to be spread. In the present embodiment the spreader elements 17 are designed as two-disc centrifugal spreaders. The smaller hopper 16 is supported by a wheel set 18. Between the wheel set 18 and the hopper 16 there are disposed height-adjusting means 19 with the aid of which the height of the spreader elements 17 can be adjusted relative to the surface to be spread. The height-adjusting means 19 comprise a (non-shown) hydraulic cylinder. The spreader member 13 is further pivotable about a substantially vertical axis 20 which is disposed at the end of the horizontal axis 15.

The wheel sets 18 of the spreader members 13 are further provided with (non-shown) drive means. In order to prevent the spreader members 13 from driving faster or slower than the tractor 3, the spreader members comprise (non-shown) synchronizing means with the aid of which the drive means are controlled in such a manner that the speed of the spreader members 13 equals the speed of the tractor 3. On the wheel set 18 of the spreader members 13 there are further disposed track-following means 21 with the aid of which the spreader member 13 can be guided across a previously determined and/or recorded track in the surface to be worked. In the present embodiment the track-following means 21 are designed as a camera.

In the telescopic carriers 11 there are disposed (non-shown) transport means with the aid of which the material to be spread can be transported from the hopper 6 to the smaller hoppers 16 of the spreader members 13.

The above-described spreading implement functions as follows:

The farmer having arrived with his tractor 3 at the parcel to be spread, the telescopic carriers 11 pivot from the transport position indicated by broken lines in Figure 1 into the working position which is shown by unbroken lines. Subsequently the farmer determines, possibly by making use of the track-following means 21, where there is a tramline in the field or, in the absence thereof, where the spreader members 13 have to be arranged. With the aid of the telescopic carriers 11 the spreader members 13 can be moved to the right place. Then the height of the spreader elements 17 can be set by means of the hydraulic cylinders 9 and the height-adjusting means 19. Subsequently the spreading of the material can be started, while with the aid of the synchronizing means the speed of the tractor 3 and the spreader members 13 is synchronized. With the aid of the track-following means 21 and (non-shown) control means disposed on each of the spreader members 13, the tramline to be adopted is followed and adjusted in case of a spreader member 13 deviating therefrom. When the work has been finished, the telescopic carriers 11 pivot hydraulically into the transport position shown by broken lines in Figure 1.

## Claims

1. An implement for spreading granular and/or pulverulent material, which implement comprises a frame (5) arranged transversely to the direction of travel of the implement (1), a hopper (6) for the material to be spread, as well as two spreader members (13) which are fitted on or to the frame (5) at some distance from each other and which are provided with a spreader element (17) for spreading the material, characterized in that at least one spreader member (13) comprises supporting means (7) with the aid of which the relevant spreader member (13) is supported on the ground during operation.

2. An implement as claimed in claim 1, characterized in that the two spreader members (13) comprise supporting means (7).

3. An implement as claimed in claim 1 or 2, characterized in that the supporting means (7) comprise a wheel or a wheel set (18).

4. An implement as claimed in claim 3, characterized in that the wheel set (18) is designed as a tandem wheel set.

5. An implement as claimed in claim 3 or 4, characterized in that the implement comprises drive means with the aid of which the wheel or the wheel set (18) is driven.

6. An implement as claimed in claim 5, characterized in that the drive means comprise synchronizing means.

7. An implement as claimed in claim 6, characterized in that the synchronizing means comprise a wheel speed sensor and/or a speed radar and/or a dynamometer.

8. An implement as claimed in any one of the preceding claims, characterized in that the implement comprises displacing means (11) with the aid of which at least one spreader member (13) can be displaced in a direction transversely to the usual direction of travel (4) of the implement.

9. An implement as claimed in claim 8, characterized in that the displacing means comprise a parallelogram construction.

10. An implement as claimed in claim 8 or 9, characterized in that the displacing means are constituted by a telescopically extendable carrier (11) which is incorporated in the frame (5).

11. An implement as claimed in any one of the preceding claims, characterized in that the implement (1) is provided with track-following means (21) with the aid of which the supporting means (7) are guided across a previously determined and/or recorded track over the surface to be worked.

12. An implement as claimed in claim 11, characterized in that the track-following means (21) comprise a feeler element by means of which a previously laid track of a tractor can be felt.

13. An implement as claimed in claim 11, characterized in that the track-following means (21) comprise a camera.

14. An implement as claimed in any one of the preceding claims, characterized in that the implement comprises height-adjusting means (9; 19) with the aid of which a spreader element (17) of a spreader member (13) can be adjusted in height.

15. An implement as claimed in any one of the preceding claims, characterized in that the frame (5) comprises coupling means (2) with the aid of which the implement can be coupled to a tractor (3) or a similar vehicle.

16. An implement as claimed in claim 15, characterized in that near the coupling means (2) there is provided a hopper (6) for the material to be spread.

17. An implement as claimed in any one of the preceding claims, characterized in that between the hopper (6) and the spreader members (13) there are disposed transport means with the aid of which the material to be spread is transported from the hopper (6) to the spreader members (13).

18. An implement as claimed in any one of the preceding claims, characterized in that the implement comprises spreader members (13) which are disposed on the frame (5) at a distance of at least 18 metres from each other.

19. An implement as claimed in any one of the preceding claims, characterized in that the spreader member (13) is designed as a two-disc centrifugal spreader.

20. An implement as claimed in claim 19, characterized in that each of the spreader discs of a centrifugal spreader distributes the material to be spread over substantially the same sector to be spread.

21. An implement as claimed in any one of claims 18 - 20, characterized in that the effective working width of the spreader members amounts to at least 36 metres.

22. An implement as claimed in any one of the preceding claims, characterized in that on either side of the hopper (6) the frame (5) comprises a carrier (11) extending transversely to the usual direction of travel (4) of the implement (1), on which carrier (11) there is disposed a spreader member (13), each of the carriers (11) being capable of pivoting, forwards or rearwards viewed in the usual direction of travel (4) of the implement, into the transport position about a respective axis (12) that is orientated substantially vertically.
